# FASCICULE DE BREVET EUROPEEN

(11) **EP 0 439 985 B1**
(45) Date de publication et mention de la délivrance du brevet: **15.12.1993**
(21) Numéro de dépôt: 90450020.4
(22) Date de dépôt: 21.12.1990
(51) Int. Cl.: B01D 24/22, B01D 24/40, B01D 24/42, B01D 24/48

(54) **Procédé et dispositif de filtration-régulation de débit notamment pour installation de traitement des eaux de piscines**
Verfahren und Anlage zur Filtrationsdurchflussregelung, insbesondere für Schwimmbeckenwasserbehandlung
Process and device for filtration/flow control, especially for the treatment of swimming pool water

(30) Priorité: 01.02.1990 FR 9001316
(43) Date de publication de la demande: 07.08.1991
(73) Titulaire: TECNOFIL, SOCIETE ANONYME DITE:, 66000 Perpignan (FR)
(72) Inventeur: Gil, Claude, F-66390 Baixas (FR); Lamotte-Badani, Jacques, F-47510 Foulayronnes (FR); Caitucoli, Jean-Rémy, F-47390 Layrac (FR)
(74) Mandataire: Thébault, Jean-Louis

(56) Documents cités:
- DE-A- 154 793
- GB-A- 231 603
- US-A- 3 587 861

## Description

La présente invention a trait en particulier aux installations de traitement des eaux de piscines et plus précisément à la filtration et à la régulation du débit de l'eau de telles installations.

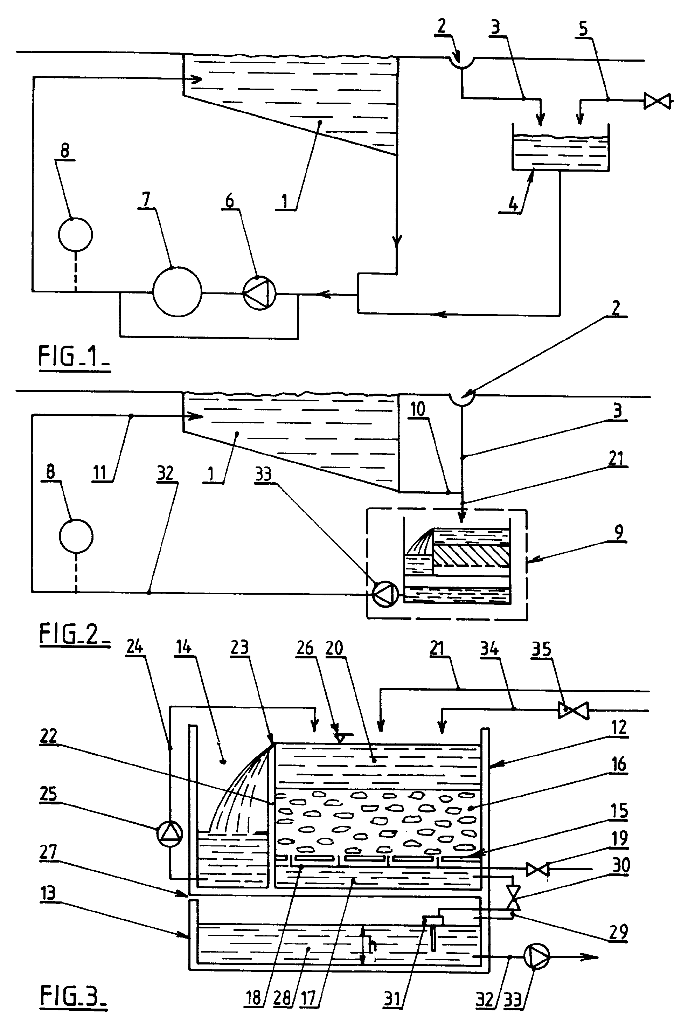

Une installation de traitement d'eau d'une piscine, telle qu'une piscine publique notamment, regroupe, comme illustré schématiquement par la figure 1 du dessin ci-annexé, un certain nombre d'éléments, à savoir :
- un bassin 1 entouré sur un, deux, trois ou quatre côtés d'un réseau de goulottes 2, équipé d'une grille de recouvrement ;
- un réseau de canalisations 3 récupérant les eaux recueillies par ces goulottes 2 ;
- un bac tampon 4 récupérant les eaux véhiculées par les canalisations 3 et recevant de temps en temps par une canalisation 5 de l'eau de compensation d'évaporation ;
- une installation de filtration et de traitement chimique comprenant notamment une pompe 6, un filtre 7 et une unité 8 d'injection dans l'eau de retour vers le bassin 1 de produits de traitement, cette installation étant reliée en amont à la fois au bassin 1 et au bac tampon 4.

Dans une telle installation, le bac tampon permet de réguler le niveau des eaux dans le bassin l en fonction du nombre de baigneurs et autorise le débordement du bassin dans les goulottes 2 pour assurer l'écrémage.

Ce type d'installation présente un certain nombre d'inconvénients.

Le bac tampon 4, d'une part, et l'ensemble pompe 6 - filtre 7, d'autre part, sont fonctionnellement et physiquement dissociés ce qui oblige à des travaux de génie civil importants, accrus par ailleurs par la nécessité de dimensionner largement le bac tampon pour qu'il remplisse convenablement sa fonction de régulation.

De plus, le débit de renouvellement de l'eau dans le bassin l est fortement tributaire de l'encrassement du filtre 7 situé en aval de la pompe 6, si bien que ce débit baisse en même temps que le filtre s'encrasse.

Le but de la présente invention est de pallier ces divers inconvénients en proposant une nouvelle technique de filtration et régulation de débit des eaux de renouvellement notamment de piscines, bassins de loisir ou analogues.

A cet effet, l'invention a pour objet un procédé de filtration-régulation de débit notamment pour installation de traitement des eaux de piscines, utilisant une filtration gravitaire à l'air libre, l'eau filtrée étant envoyée dans un réservoir mis à l'atmosphère, de manière contrôlée en sorte de conserver dans ledit réservoir une hauteur d'eau de préférence sensiblement constante, et ensuite reprise dudit réservoir et envoyée dans le circuit d'eau de renouvellement de la piscine, caractérisé en ce qu'il consiste à soumettre la totalité des eaux à ladite filtration gravitaire, à charge constante, en recueillant l'excès d'eau brute à filtrer et le stockant dans un bac tampon en vue de son recyclage ultérieur automatique dans le circuit de filtration.

L'invention concerne également un dispositif de filtration-régulation pour la mise en oeuvre du procédé ci-dessus, comprenant un bac supérieur ouvert comportant un plancher filtrant supportant un lit granulaire de filtration au dessus duquel l'eau brute à filtrer est admise en provenance notamment du réseau de récupération des eaux de la piscine, un bac inférieur également ouvert, alimenté en eau filtrée de façon régulée en sorte de maintenir un niveau d'eau filtrée sensiblement constant, et un circuit prélevant l'eau filtrée pour la renvoyer dans le circuit de renouvellement d'eau du bassin de la piscine, caractérisé en ce qu'il comporte un bac tampon, également ouvert, adjacent audit bac supérieur et communiquant avec ce dernier par un déversoir, une pompe de recirculation prélevant l'eau du bac tampon et la réintroduisant dans ledit bac supérieur, sous la commande d'un détecteur du niveau d'eau dans le bac supérieur, au dessus du lit filtrant.

Un tel dispositif assure à la fois la filtration et la régulation de débit de l'eau de renouvellement de la piscine et se présente sous la forme d'une unité ou module extrêmement compact et de dimensions réduites en comparaison avec les unités conventionnelles, très sensiblement de dimensions plus importantes et implantées en des endroits séparés et chargées, l'une, de filtrer et recycler l'eau, l'autre, de réguler (bac tampon traditionnel) les eaux de débordement de la piscine.

D'autres caractéristiques et avantages ressortiront de la description qui va suivre d'un mode de réalisation préféré du dispositif de l'invention, description donnée à titre d'exemple uniquement et en regard du dessin annexé sur lequel:
- Figure 1 est un schéma d'une installation conventionnelle de traitement et recyclage des eaux d'une piscine ;
- Figure 2 est un schéma de la piscine de la figure 1 équipée d'un dispositif conforme à l'invention, et
- Figure 3 est une vue en coupe verticale d'un mode de réalisation d'un dispositif de filtration-régulation de débit selon l'invention.
- Sur la figure 2 on a représenté symboliquement en 9 un module de filtration-régulation conforme à l'invention, relié, d'une part, au réseau 3 de canalisations de récupération des eaux de débordement, via les goulottes 2 de la piscine 1, ainsi qu'à cette dernière par une canalisation de vidange 10 et, d'autre part, au circuit 11 de renouvellement d'eau de la piscine.

La figure 3 est une vue détaillée du module 9 en coupe verticale.

Le module présente la forme générale d'une enceinte parallélépipèdique cloisonnée en trois bacs, tous à l'atmosphère, à savoir un bac supérieur 12 de filtration, un bac inférieur 13 de stockage et recirculation de l'eau filtrée et un bac latéral 14 faisant office de bac tampon.

Les bacs sont constitués par exemple par des coques de polyester moulées.

Le bac supérieur 12 comporte un plancher filtrant 15 délimitant un espace supérieur où se trouve un lit épais granulaire de filtration 16 et un espace inférieur 17 servant de réserve d'eau filtrée.

Le plancher filtrant 15 est par exemple constitué, à la manière connue, de dalles poreuses jointoyées par un ciment-colle et portées par des chevrons. En dessous du plancher est disposé un réseau de canalisations 18 alimenté en air comprimé par l'intermédiaire d'une vanne 19 et destiné au nettoyage, également à la manière connue, du plancher 15.

Le plancher supporte un lit filtrant granulaire 16 de type conventionnel, par exemple du sable, ou tout autre matériau filtrant granulaire réparti en une ou plusieurs couches de nature et de granulométrie différentes, d'une épaisseur appropriée.

L'eau brute à filtrer 20 est amenée par gravité dans le bac 12, au dessus du lit 16 par une canalisation 21 reliée auxdites canalisations 3 et 10.

Cette eau brute à filtrer 20 est contenue en partie supérieure du bac 12 dont la paroi 22 tournée vers le bac tampon 14 est à un niveau légèrement inférieur à celui des trois autres parois du bac, afin de constituer un déversoir de trop-plein 23 vers ledit bac 14.

L'eau du bac 14 est remontée et déversée dans le bac 12 par une canalisation 24 munie d'une pompe de recirculation 25 commandée par un détecteur de niveau 26 disposé dans le bac 12.

Le bac inférieur 13 est mis à l'air libre par une communication symbolisée en 27 sur la figure 3. Ce bac est chargé de stocker l'eau filtrée 28 transférée depuis l'espace 17 par une canalisation 29 munie d'une vanne 30 de régulation de débit chargée de compenser la perte de charge du filtre due à son encrassement progressif et commandée par un organe de mesure de niveau 31 disposé dans le bac 13. A titre d'exemple, la vanne 30 est une vanne de type papillon à positionnement quart-de-tour et le détecteur 31 est une sonde capacitive plongée dans l'eau filtrée (17).

L'eau filtrée est reprise dans le bac 13 par une canalisation 32 dans laquelle est interposée la pompe principale 33 d'alimentation du bassin 1 de la piscine. Dans cette canalisation 32 sont introduits d'éventuels agents de traitement (8, figure 2) de l'eau.

Le fonctionnement du dispositif décrit ci-dessus est le suivant.

L'eau à filtrer arrive dans le bac 12 par la canalisation 21. L'excès d'eau est déversé dans le bac tampon 14.

S'il advient que le niveau dans le bac 12 descend d'une certaine valeur en dessous du niveau du déversoir 28, le détecteur 26 déclenche automatiquement la pompe de recirculation 25 qui remonte l'eau brute du bac tampon 14 et la déverse dans le bac 12 pour remonter le niveau en sorte qu'en permanence le filtre 16 travaille pratiquement à charge constante. Une canalisation 34 munie d'une vanne 35 et branchée sur le réseau de distribution d'eau permet le cas échéant d'effectuer un apport d'eau neuve.

L'eau s'écoule par percolation descendante à travers le lit filtrant 16 et le plancher 15 et est recueillie dans l'espace 17. Elle est envoyée dans le bac 13 par la vanne 30.

La vanne 30 fait office d'organe de régulation du débit d'eau filtrée depuis l'espace 17. Elle doit permettre à tout moment le passage d'un débit constant et égal au débit de la pompe 33 d'alimentation de la piscine.

La position d'ouverture de la vanne 30 est commandée par la hauteur h du bac 13 mesurée à l'aide de la sonde de détection 31 selon le protocole suivant : une baisse du niveau h signifie une chute du débit de filtration attribuable à l'encrassement du filtre 16 ; pour compenser cette perte de charge la vanne 30 doit offrir une ouverture de passage plus grande jusqu'à stabilisation du niveau h affiché sur le détecteur 31.

L'encrassement progressif du filtre est ainsi compensé par une modification appropriée de l'ouverture de la vanne 30.

La pompe principale 33 fonctionne ainsi en permanence avec une hauteur d'eau h sensiblement constante à l'aspiration.

Le filtre 16 qui est un filtre gravitaire ouvert à charge constante, procure une meilleure qualité de la filtration qu'un filtre sous pression.

Le fait de prévoir un bac tampon 14 adjacent au bac filtrant 12 permet aussi de réduire en dimensions et en encombrement l'ensemble du module 9.

Une telle conception intégrée de la filtration (bac 12) et de la régulation de débit (bac 14) permet de réaliser un ensemble ou module 9 remarquablement compact par son volume et ses dimensions. Les bacs 12, 13 et 14 sont regroupés avec leurs équipements complémentaires (pompes, vannes, conduites, armoire de commande, etc...) pour former un ensemble parallélépipèdique unitaire plus simple à fabriquer, à installer et à entretenir.

Ses coûts de réalisation et d'implantation dans le site de la piscine, du fait notamment de la possibilité de réaliser et monter en atelier tout le module 9 avec ses équipements complémentaires (à l'exception du filtre) et de transporter facilement l'ensemble, sont substantiellement inférieurs aux coûts de réalisation des deux ensembles traditionnels séparés, de filtration et de régulation respectivement.

## Revendications

1. Procédé de filtration-régulation de débit pour installation de traitement des eaux notamment de piscines, utilisant une filtration gravitaire à l'air libre (16), l'eau filtrée étant envoyée dans un réservoir (13) mis à l'atmosphère, de manière contrôlée en sorte de conserver dans ledit réservoir une hauteur d'eau de préférence sensiblement constante, et ensuite reprise dudit réservoir (13) et envoyée dans le circuit d'eau de renouvellement notamment d'une piscine, caractérisé en ce qu'il consiste à soumettre la totalité des eaux à ladite filtration gravitaire, à charge constante, en recueillant l'excès d'eau brute à filtrer et le stockant dans un bac tampon (14) en vue de son recyclage ultérieur automatique dans le circuit de filtration (16).

2. Dispositif pour la mise en oeuvre du procédé suivant la revendication 1, comprenant un bac supérieur ouvert (12) comportant un plancher filtrant (15) supportant un lit granulaire de filtration (16) au dessus duquel l'eau brute à filtrer est admise (21) en provenance notamment du réseau de récupération des eaux de la piscine (1), un bac inférieur (13) également ouvert, alimenté en eau filtrée de façon régulée en sorte de maintenir un niveau d'eau filtrée sensiblement constant, et un circuit (32,33) prélevant l'eau filtrée pour la renvoyer dans le circuit de renouvellement d'eau (11) du bassin (1) notamment d'une piscine, caractérisé en ce qu'il comporte un bac tampon (14), également ouvert, adjacent audit bac supérieur (12) et communiquant avec ce dernier par un déversoir (23), une pompe de recirculation (25) prélevant l'eau du bac tampon (14) et la réintroduisant dans ledit bac supérieur, sous la commande d'un détecteur (26) du niveau d'eau dans le bac supérieur (12), au dessus du lit filtrant (16).

3. Dispositif suivant la revendication 2, caractérisé en ce que les trois bacs (12,13,14) sont réalisés en un seul élément ou module (9) cloisonné de manière appropriée et délimitant un volume parallélépipèdique ou cylindrique, les divers équipements (25,30,33) étant montés sur ledit module.

## Patentansprüche

1. Verfahren zur Filtrationsdurchflußregelung zur Wasserbehandlung insbesondere von Schwimmbecken, das eine Gravitationsfiltrierung (16) an freier Luft verwendet, wobei das filtrierte Wasser in einen mit der Atmosphäre verbundenen Aufnahmebehälter (13) in kontrollierter Weise derart geleitet wird, daß in dem besagten Aufnahmebehälter ein vorzugsweise im wesentlichen konstanter Wasserstand aufrechterhalten wird, und anschließend wieder aus dem besagten Aufnahmebehälter (13) entnommen und in den Wassererneuerungskreis insbesondere eines Schwimmbeckens geleitet wird, dadurch gekennzeichnet, daß es darin besteht, die Gesamtheit des Wassers der Gravitationsfiltrierung bei konstanter Aufgabe zu unterwerfen, wobei der Überschuß an zu filtrierendem Rohwasser gesammelt und in einem Pufferbehälter (14) zu seinem späteren automatischen Zurückführen in den Filtrierkreislauf (16) gespeichert wird.

2. Anlage zur Durchführung des Verfahrens gemäß Anspruch 1, umfassend einen offenen oberen Behälter (12) enthaltend einen Filterboden (15), der ein körniges Filterbett (16) trägt, auf das das zu filtrierende Rohwasser, das insbesondere von einem Wiederaufbereitungsnetz für Wasser des Schwimmbeckens (1) stammt, aufgegeben wird (21), einen ebenfalls offenen unteren Behälter (13), der mit filtriertem Wasser reguliert derart versorgt wird, daß ein im wesentlichen konstantes Niveau an filtriertem Wasser aufrechterhalten wird, und eine Leitung (32, 33), die filtriertes Wasser abnimmt, um dieses in den Wassererneuerungskreis (11) des Schwimmbeckens (1) zu leiten, dadurch gekennzeichnet, daß sie einen ebenfalls offenen Pufferbehälter (14) benachbart zu dem besagten oberen Behälter (12) und mit letzterem über einen Überlauf (23) verbunden umfaßt, wobei eine Rückführungspumpe (25) das Wasser aus dem Pufferbehälter (14) entnimmt und in den besagten oberen Behälter unter Steuerung durch einen Detektor (26) für den Wasserstand in dem oberen Behälter (12) auf das Filterbett (16) zurückführt.

3. Anlage gemäß Anspruch 2, dadurch gekennzeichnet, daß die drei Behälter (12, 13, 14) als ein einzelnes Element oder Modul (9) realisiert sind, das in geeigneter Weise durch Zwischenwände unterteilt ist und ein quaderförmiges oder zylindrisches Volumen begrenzt, wobei die verschiedenen Ausrüstungsteile (25, 30, 33) an dem besagten Modul montiert sind.

## Claims

1. Filtration and flow regulation method for a water treatment plant, particularly for swimming pools, using open-air gravity filtration (16), the filtered water being directed into a reservoir (13) open to atmosphere, in a manner which is controlled so as to keep a water level in the said reservoir which is preferably more or less constant, and then taken from the said reservoir (13) and directed into the renewal water circuit, particularly for a swimming pool, characterised in that it consists of subjecting all the water to the said gravity filtration, at a constant load, collecting the excess untreated water to be filtered and storing it in a buffer tank (14) with a view to its subsequent automatic recycling in the filtration circuit (16).

2. Device for implementing the method according to Claim 1, comprising an open upper tank (12) having a filter deck (15) supporting a granular filter bed (16) above which the untreated water to be filtered is admitted (21), coming notably from the system for recovering the water from the swimming pool (1), a lower tank (13), also open, fed with filtered water in a regulated manner so as to maintain a level of filtered water which is substantially constant, and a circuit (32, 33) taking off the filtered water in order to return it to the circuit for renewing the water (11) in the pool (1), particularly a swimming pool, characterised in that it includes a buffer tank (14), also open, adjacent to the said upper tank (12) and communicating with the latter through an overflow (23), a recirculating pump (25) taking off the water from the buffer tank (14) and reintroducing it into the said upper tank, under the control of a water-level detector (26) in the upper tank (12), above the filter bed (16).

3. Device according to Claim 2, characterised in that the three tanks (12, 13, 14) are constructed as a single unit or module (9) partitioned suitably and defining a parallelepipedal or cylindrical volume, the various items of equipment (25, 30, 33) being mounted on the said module.
